(19) **Europäisches Patentamt European Patent Office Office européen des brevets**

(11) **EP 1 849 585 B1**

(12) **EUROPÄISCHE PATENTSCHRIFT**

(45) Veröffentlichungstag und Bekanntmachung des Hinweises auf die Patenterteilung:
**29.09.2010 Patentblatt 2010/39**

(51) Int Cl.:
***B29C 65/18*** *(2006.01)*

(21) Anmeldenummer: **06025164.2**

(22) Anmeldetag: **06.12.2006**

(54) **Verfahren zur Herstellung von Siegelwerkzeugen unter Berücksichtigung einer Kenngrösse für die Siegelqualität**

Process of manufacturing sealing tools in consideration of a parameter for the sealing quality

Procédé pour manufacturer des outils de soudage considérant un paramètre de la qualité de soudage

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.04.2006 DE 102006020453**

(43) Veröffentlichungstag der Anmeldung:
**31.10.2007 Patentblatt 2007/44**

(73) Patentinhaber: **UHLMANN PAC-SYSTEME GmbH & Co. KG**
**88471 Laupheim (DE)**

(72) Erfinder:
- **Krahl, Wolfgang**
  **D-88471 Laupheim (DE)**
- **Felk Günter**
  **D-89079 Ulm-einsingen (DE)**

(74) Vertreter: **Wächter, Jochen et al**
**Kroher-Strobel**
**Rechts- und Patentanwälte**
**Bavariaring 20**
**80336 München (DE)**

(56) Entgegenhaltungen:
**EP-A- 0 242 480        EP-A- 0 256 791**
**WO-A-2006/127075**

**Beschreibung**

Die Erfindung betrifft Siegelwerkzeuge, die auf ihrer zum Siegelndienenden Seite Riffel aufweisen. Derartige Siegelwerkzeuge sind z.B. aus EP 0 242 480 A oder EP 0 256 791 A bekannt.

Bei der Herstellung von derartigen Siegelwerkzeugen, die in der Praxis seit langem etabliert sind, erfolgt die Auslegung der Riffelgeometrie bislang ohne die Berücksichtigung von Kenngrößen, die einen entscheidenden Einfluss auf die Siegelqualität nehmen.

Mit der Verwendung der nach bekannten Herstellungsverfahren gefertigten Siegelwerkzeuge ist daher auch der Nachteil verbunden, dass sich die Siegelgüte nur bedingt prognostizieren lässt und diese aufgrund des durch die Riffelgeometrie oftmals gegebenen geringen Toleranzausgleichs nicht reproduzierbar ist, so dass sie zuweilen den hohen Anforderungen, insbesondere bei der Verpackung von Arzneimittelprodukten, nicht genügt.

Der Erfindung liegt daher die Aufgabe zugrunde, ein Verfahren zur Herstellung von Siegelwerkzeugen mit Riffeln anzugeben, mit denen unter Berücksichtigung der Materialeigenschaften der zu siegelnden Werkstücke eine prognostizierbare und reproduzierbare Siegelgüte ermöglicht wird.

Diese Aufgabe wird nach der Erfindung durch die Merkmale des Anspruchs 1 gelöst.

Die Erfindung ist gebildet durch ein Verfahren zur Herstellung von Siegelwerkzeugen zum Einsatz in einer Siegelstation, insbesondere in einer Thermoformmaschine, bei der Folien zwischen zwei Siegelwerkzeugen geführt werden, die jeweils auf ihrer den Folien zugewandten Seite Riffel mit einem einheitlichen gegenseitigen Abstand T aufweisen und bei der eine Kompensation der Toleranzen der Siegelwerkzeuge und der Folien durch eine definierte Eintauchtiefe der sich jeweils gegenüberstehenden Riffel in den aus den Folien bestehenden Folienverband erfolgt. Bei dem Verfahren wird der Abstand T der Riffel vorgegeben und nachfolgend die Druckspannung $\sigma_{Ds}$ experimentell gemessen, die für die definierte Eindringtiefe eines Testkörpers mit bekannter Geometrie in den Folienverband notwendig ist, und unter Verwendung der durch die Siegelstation aufgebrachten Druckspannung $\sigma_d$, die sich aus dem Quotienten der in die Siegelwerkzeuge eingeleiteten Kraft pro Flächeneinheit der Siegelwerkzeuge ergibt, wird die für die definierte Eindringtiefe notwendige Riffelfläche A gemäß der Beziehung

$$A = \sigma_d * T^2 / \sigma_{Ds}$$

festgelegt .

Die Verwendung der nach diesem Herstellungsverfahren gefertigten Siegelwerkzeuge bietet den Vorteil, dass ein optimaler Toleranzausgleich durch eine von Werkstücksowie Siegelwerkzeugparametern abhängige Auslegung der Riffelgeometrie im Voraus festgelegt werden kann, und hierdurch auf einfache Weise eine weitgehend reproduzierbare Siegelqualität im gesamten Bereich der Siegelfläche ermöglicht wird. Dies führt zu einer entscheidenden Erhöhung der Prozesssicherheit bei gleichzeitig deutlicher Reduktion ausschussbedingter Folgekosten.

Im Rahmen der Erfindung ist es darüber hinaus vorgesehen, dass die experimentelle Bestimmung der für die definierte Eindringtiefe eines Körpers mit bekannter Geometrie in den Folienverband notwendigen Druckspannung $\sigma_{Ds}$ unabhängig von der Siegelstation in einer separaten Meßstation erfolgt. Hiermit ist der Vorteil verbunden, dass die für die Festlegung der Riffelgeometrie notwendigen Meßwerte unabhängig von dem Betrieb der Siegelstation sowie deren Aufstellungsort erhoben werden können. Neben der hierdurch gegebenen Möglichkeit zur Auslagerung der Fertigung der Siegelwerkzeuge können jeweils auf die Werkstücke abgestimmte Siegelwerkzeuge gefertigt werden. Darüber hinaus kann die Auswahl der für die jeweilige Aufgabenstellung geeigneten Siegelwerkzeuge vor deren Einbau in die Siegelstation auf einfache Weise überprüft werden. Die von der Siegelstation unabhängige Messung bietet zudem einen Kostenvorteil, da für diese Messung kleine Probenstücke der Folien genügen.

Im Rahmen der Erfindung ist zusätzlich vorgesehen, dass, ausgehend von dem Abstand der Riffel des einen Siegelwerkzeuges bei dessen Siegeltemperatur, der Abstand der Riffel des anderen Siegelwerkzeugs bei Fertigungstemperatur dergestalt festgelegt wird, dass der Abstand bei dessen Siegeltemperatur dem Abstand der Riffel des einen Siegelwerkzeugs entspricht. Der hiermit verbundene Vorteil besteht darin, dass zum Zeitpunkt des Siegelprozesses, bei dem die Siegelwerkzeuge in der Regel unterschiedlich temperiert sind, ein Siegelwerkzeugpaar vorliegt, das eine identische Anordnung der Riffel auf der jeweils den Folien zugewandten Seite aufweist. Bei entsprechender Positionierung der Siegelwerkzeuge auf dem zugeordneten Werkzeugträgern wird hierdurch eine zur Folienebene spiegelbildliche Anordnung der Riffel, das heißt exakt einander gegenüber angeordneter Riffel und damit verbunden, eine definierte Krafteinleitung sowie definierte Temperaturverhältnisse an vergleichbaren Folienbereichen ermöglicht. Hieraus ergibt sich ein durchgängig gleichmäßiges Siegelbild von nochmals verbesserter Siegelgüte.

Die Erfindung wird nachfolgend an einem in der Zeichnung dargestellten Ausführungsbeispiel näher erläutert. Es zeigen:

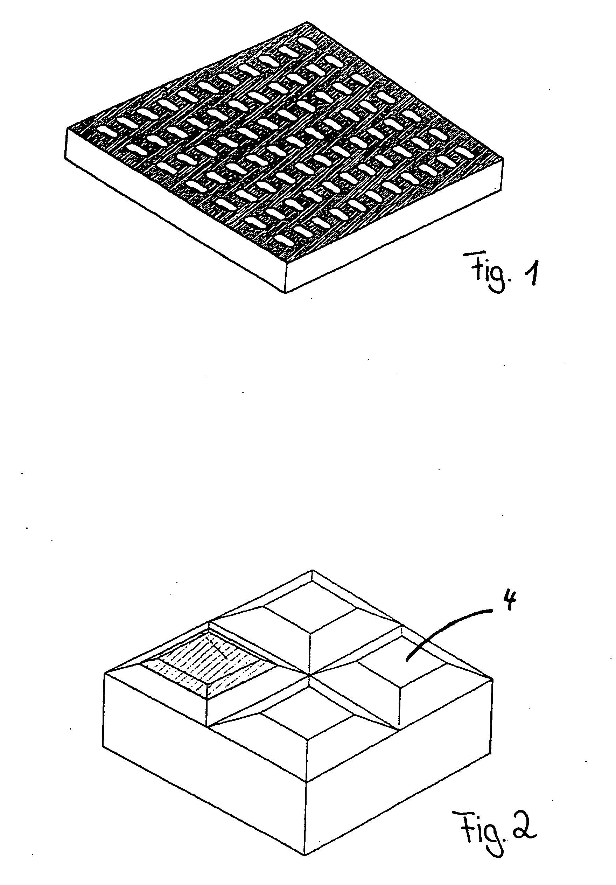

Fig. 1     eine schematische, perspektivische Darstellung eines Siegelwerkzeugs mit seiner Siegelfläche,

Fig. 2     eine perspektivische Draufsicht auf die Riffel des Siegelwerkzeugs mit beispielhafter Kennzeichnung der in den Folienverbund eindringenden Riffelfläche, und

Fig. 3    einen schematischen Querschnitt durch zwei Siegelwerkzeuge mit zwischen diesen geführten Folien.

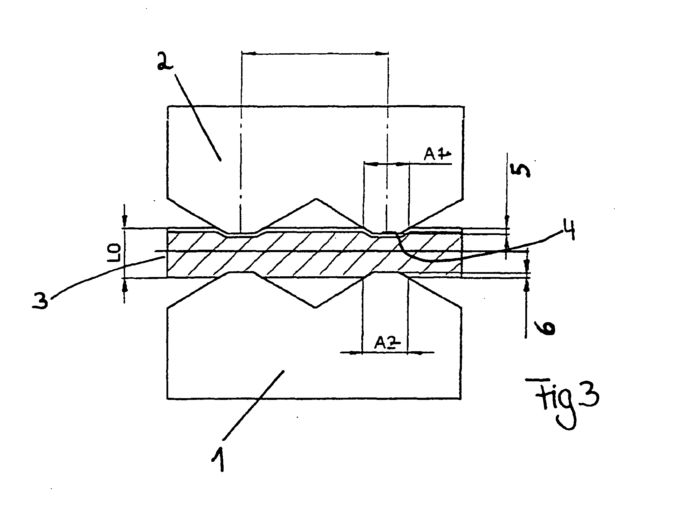

Wie insbesondere aus Figur 3 zu erkennen ist, weisen die Siegelwerkzeuge 1,2, wie sie in einer Siegelstation, insbesondere in einer Thermoformmaschine zum Einsatz kommen, bei der Folien 3 zwischen diesen geführt werden, auf ihrer den Folien 3 zugewandten Seite Riffel 4 mit einem gegenseitigen Abstand T auf. Eine Kompensation der Toleranzen der Siegelwerkzeuge 1,2 und der Folien 3 erfolgt durch die definierten Eintauchtiefen s1 und s2 5,6 der sich jeweils gegenüberstehenden Riffel 4, wobei sich die Größe des Toleranzausgleichs aus der Summe der Eintauchtiefen s1 und s2 ergibt. Bei der Formel

$$(s_1 + s_2) = (\sigma_{Ds1} + \sigma_{Ds2}) * L_0 / E$$

mit $L_0$ = Dicke der Folien und E = Elastizitätsmodul der Folien, stellen die Druckspannungen $\sigma_{Ds1}$, $\sigma_{Ds2}$ der Riffel 4 die einzigen Parameter dar, die bei von der Siegelstation vorgegebener Druckspannung $\sigma_d$, veränderbar sind. Die experimentelle Bestimmung der Druckspannung $\sigma_{Ds}$ erfolgt durch Messung der für die definierte Eindringtiefe eines Testkörpers mit bekannter Geometrie in den Folienverband notwendigen Druckspannung. Unter Verwendung der durch die Siegelstation aufgebrachten Druckspannung $\sigma_d$, die sich aus dem Quotienten der in die Siegelwerkzeuge 1,2 eingeleiteten Kraft pro Flächeneinheit der Siegelwerkzeuge 1,2 ergibt, kann gemäß der Beziehung

$$A = \sigma_d * T^2 / \sigma_{Ds}$$

die für die definierte Eindringtiefe notwendige Riffelfläche A bestimmt werden. Da die Riffel eines Siegelwerkzeugs 1,2 im allgemeinen eine gleiche Fläche und Geometrie aufweisen, ist die derart bestimmte Riffelfläche auf alle auf der Oberfläche des Siegelwerkzeuges 1,2 angeordneten Riffel 4 übertragbar.

Die experimentelle Bestimmung der für die definierte Eindringtiefe eines Körpers mit bekannter Geometrie in den Folienverband notwendigen Druckspannung $\sigma_{Ds}$ kann hierbei unabhängig von der Siegelstation in einer separaten Meßstation erfolgen. Dies ermöglicht zum einen die Festlegung der Geometrie der Riffel 4 sowie die Produktion der Siegelwerkzeuge 1,2 an einem anderen Ort als dem Aufstellungsort der Siegelstation, zum anderen kann die Auswahl der für die Siegelung eines bestimmten Folienverbands geeigneten Siegelwerkzeuge 1,2 vor Beginn des Siegelprozesses und vor Produktion von Ausschußware getroffen werden. Im Rahmen der Qualitätssicherung kann überdies bei Auftreten von Störungen im Bereich der Siegelfläche eine erneute Überprüfung und Verifizierung der korrekten Auswahl der Siegelwerkzeuge durchgeführt werden. Darüber hinaus lassen sich verschiedene Chargen der in der Siegelstation verarbeiteten Werkstücke, hier also der Folien 4, hinsichtlich vergleichbarer Eigenschaften wie deren Dicke und deren E-Modul auf einfache Weise hinsichtlich des später zu erwartenden Siegelergebnisses überprüfen.

Da die am Siegelprozess beteiligten Siegelwerkzeuge 1,2 bei Ausführung des Siegelvorgangs im allgemeinen unterschiedliche Temperaturen aufweisen, ist eine Berücksichtigung der zu erwartenden Wärmeausdehnung der Siegelwerkzeuge 1,2 bei dem Herstellungsprozess von besonderem Vorteil. Es wird daher zweckmäßigerweise, ausgehend von dem Abstand der Riffel des einen Siegelwerkzeuges bei dessen Siegeltemperatur, der Abstand der Riffel des anderen Siegelwerkzeugs bei Fertigungstemperatur dergestalt festgelegt, dass der Abstand bei dessen Siegeltemperatur dem Abstand der Riffel des einen Siegelwerkzeugs entspricht. Dies ermöglicht bei entsprechender Justierung der für die Ausführung des Siegelvorganges temperierten Siegelwerkzeuge auf den ihnen zugeordneten Werkzeugträgern eine hinsichtlich der Folienebene zueinander exakt spiegelbildliche Anordnung der Riffel. Hierdurch erfolgt eine Kraft- und Wärmeeinleitung an definierten Stellen des Folienverbundes, was ein einheitliches und hochwertiges Siegelbild über die gesamte Siegelfläche ermöglicht.

**Patentansprüche**

1.    Verfahren zur Herstellung von Siegelwerkzeugen (1,2) zum Einsatz in einer Siegelstation, insbesondere in einer Thermoformmaschine, bei der Folien (3) zwischen zwei Siegelwerkzeugen geführt werden, die jeweils auf ihrer den Folien (3) zugewandten Seite Riffel (4) mit einem einheitlichen gegenseitigen Abstand T aufweisen, und bei der eine Kompensation der Toleranzen der Siegelwerkzeuge (1,2) und der Folien (3) durch eine definierte Eintauchtiefe (5,6) der sich jeweils gegenüberstehenden Riffel (4) in den aus den Folien (3) bestehenden Folienverband erfolgt, **dadurch gekennzeichnet, dass** der Abstand T der Riffel (4) vorgegeben wird und nachfolgend die experimentelle Messung der Druckspannung $\sigma_{DS}$ erfolgt, die für die definierte Eindringtiefe eines Testkörpers mit bekannter Geometrie in den Folienverband notwendig ist, und unter Verwendung der durch die Siegelstation aufgebrachten Druckspannung $\sigma_d$, die sich aus dem Quotienten der in die Siegelwerkzeuge (1,2) eingeleiteten Kraft pro Flächeneinheit der Siegelwerkzeuge (1,2) ergibt, die für die definierte Eindringtiefe notwendige Riffelfläche A gemäß der Beziehung

$$A = \sigma_d \ast T^2/\sigma_{Ds}$$

festgelegt wird.

2. Verfahren nach Anspruch 1, **dadurch gekennzeichnet, dass** die experimentelle Bestimmung der für die definierte Eindringtiefe eines Körpers mit bekannter Geometrie in den Folienverband notwendigen Druckspannung $\sigma_{DS}$ unabhängig von der Siegelstation in einer separaten Messstation erfolgt.

3. Verfahren nach Anspruch 1, **dadurch gekennzeichnet, dass**, ausgehend von dem Abstand der Riffel des einen Siegelwerkzeuges bei dessen Siegeltemperatur, der Abstand der Riffel des anderen Siegelwerkzeugs bei Fertigungstemperatur dergestalt festgelegt wird, dass der Abstand der Riffel bei dessen Siegeltemperatur dem Abstand der Riffel des einen Siegelwerkzeugs entspricht.

**Claims**

1. Method of producing sealing tools (1, 2) for use in a sealing station, in particular in a thermoforming machine, in which films (3) are guided between two sealing tools, each of which have ridges (4), at a uniform, mutual distance T, on the side thereof facing the films (3), and in which the tolerances of the sealing tools (1, 2) and the films (3) are compensated by a defined penetration depth (5, 6) of the mutually opposing ridges (4) into the composite film formed from the films (3), **characterised in that** the distance T of the ridges (4) is predetermined and then the compressive stress $\sigma_{DS}$ required to achieve the defined penetration depth of a test member of known geometry into the composite film is measured experimentally, and the ridge surface area A required to achieve the defined penetration depth established in accordance with the equation

$$A = \sigma_d \ast T^2/\sigma_{Ds}$$

by using the compressive stress $\sigma_d$ which is applied by the sealing station and is obtained from the quotient of the force introduced into the sealing tools (1, 2) per unit area of the sealing tools (1, 2).

2. Method according to claim 1, **characterised in that** the compressive strength $\sigma_{Ds}$ required to achieve the defined penetration depth of a member of known geometry into the composite film is determined experimentally independently of the sealing station in a separate measuring station.

3. Method according to claim 1, **characterised in that**, on the basis of the distance of the ridges of a first sealing tool at the sealing temperature thereof, the distance of the ridges of the second sealing tool at the production temperature is established in such a way that the distance of the ridges at the sealing temperature thereof corresponds to the distance of the ridges of the first sealing tool.

**Revendications**

1. Procédé de fabrication d'outils de soudage (1, 2) destinés à l'utilisation dans un poste de soudage, en particulier dans une machine de thermoformage, dans lequel des feuilles (3) sont guidées entre deux outils de soudage qui présentent chacun, sur leur côté tourné vers les feuilles (3), des cannelures (4) avec un écartement mutuel T uniforme, et dans lequel une compensation des tolérances des outils de soudage (1, 2) et des feuilles (3) s'effectue par une profondeur de pénétration définie (5, 6) des cannelures (4), respectivement en vis-à-vis, dans l'assemblage de feuille constitué des feuilles, **caractérisé en ce que** l'écartement T des cannelures (4) est prédéfini et la mesure expérimentale de la contrainte de compression $\sigma_{Ds}$ s'effectue ensuite, laquelle est requise pour la profondeur de pénétration définie d'un corps d'essai de géométrie connue dans l'assemblage de feuilles, et la surface de cannelures A, requise pour la profondeur de pénétration définie, est déterminée suivant la relation

$$A = \sigma_d \ast T^2/\sigma_{Ds}$$

en utilisant la contrainte de compression $\sigma_d$ appliquée par le poste de soudage, laquelle contrainte résulte du quotient de la force par unité de surface des outils de soudage (1, 2), transmise dans les outils de soudage (1, 2).

2. Procédé suivant la revendication 1, **caractérisé en ce que** la détermination expérimentale de la contrainte de compression $\sigma_{Ds}$, requise pour la profondeur de pénétration définie d'un corps de géométrie connue dans l'assemblage de feuilles, s'effectue indépendamment du poste de soudage dans un poste de mesure séparé.

3. Procédé suivant la revendication 1, **caractérisé en**

**ce que**, à partir de l'écartement des cannelures de l'un des outils de soudage à la température de soudage de ce dernier, l'écartement des cannelures de l'autre outil de soudage est déterminé à la température de fabrication de telle sorte que l'écartement des cannelures, à la température de soudage de ce dernier, correspond à l'écartement des cannelures de l'un des outils de soudage.

Fig. 1

4

Fig. 2

Fig 3

**IN DER BESCHREIBUNG AUFGEFÜHRTE DOKUMENTE**

**In der Beschreibung aufgeführte Patentdokumente**

- EP 0242480 A

- EP 0256791 A